# EUROPÄISCHE PATENTSCHRIFT

(11) **EP 1 405 388 B1**
(45) Veröffentlichungstag und Bekanntmachung des Hinweises auf die Patenterteilung: **20.12.2006**
(21) Anmeldenummer: 02740386.4
(22) Anmeldetag: 28.05.2002
(51) Int. Cl.: H02K 16/04, H02K 19/10

(54) **GESCHALTETER RELUKTANZMOTOR MIT RADIALEM UND TRANSVERSALEM FLUSS**
SWITCHED RELUCTANCE MOTOR WITH RADIAL AND TRANSVERSE FLUX
MOTEUR A RELUCTANCE COMMUTEE, A FLUX RADIAL ET TRANSVERSAL

(30) Priorität: 29.06.2001 DE 10131428
(43) Veröffentlichungstag der Anmeldung: 07.04.2004
(73) Patentinhaber: ROBERT BOSCH GMBH, 70442 Stuttgart (DE)
(72) Erfinder: KARRELMEYER, Roland, 71254 Ditzingen (DE); DILGER, Elmar, 70771 Leinfelden-Echterdingen (DE)
(86) Internationale Anmeldenummer: PCT/DE2002/001956
(87) Internationale Veröffentlichungsnummer: WO 2003/005536

(56) Entgegenhaltungen:
- US-A- 3 467 845
- US-A- 5 345 131
- US-A- 5 952 756

## Beschreibung

### STAND DER TECHNIK

Die Erfindung betrifft einen geschalteten, bürstenlosen Reluktanzmotor mit einem Radialfluss-Stator, mit dem auf einen drehbar gelagerten Anker ein in radialer Richtung wirkender magnetischer Radialfluss erzeugbar ist. Durch umlaufende, geschaltete Bestromung von an den Radialfluss-Polen des Radialfluss-Stators angeordneten Radialfluss-Spulen wird ein magnetisches Drehfeld erzeugt und der Anker in eine Drehbewegung versetzt. Die Pole des Ankers werden dabei jeweils in Richtung zu den jeweils magnetisch erregten Radialfluss-Polen bewegt, so dass der von den Radialfluss-Polen über den Anker führende magnetische Radialfluss einen möglichst kurzen Weg zurücklegt.

Weiterhin weist der bürstenlose Reluktanzmotor einen Transversalfluss-Stator auf, dessen Transversalfluss-Pole elektrische Transversalfluss-Spulen zum Erzeugen eines auf den Anker in transversaler Richtung wirkenden magnetischen Transversal-Flusses zugeordnet sind, wobei bei einer geschalteten, umlaufenden Bestromung der Transversalfluss-Spulen der Anker in eine Drehbewegung versetzt ist. Ein entsprechender, jedoch nicht als Reluktanzmotor ausgebildeter Gleichstromotor ist aus der US-A-5,952,756 bekannt.

Geschaltete Reluktanzmotoren, die auch aufgrund ihrer englischen Bezeichnung "Switched Reluctance"-Motor als SR-Motoren bezeichnet werden, sind verhältnismäßig einfach aufgebaut und weisen daher eine hohe Zuverlässigkeit auf. Lediglich am Ringfluss-Stator sind Spulen angebracht, die mittels einer Stromversorgungseinrichtung, üblicherweise eines Stromrichters, umlaufend bestromt werden. Typischerweise weist der Strom dabei eine Dreieckform oder eine Sägezahnform auf. Der Anker besteht aus magnetisch leitfähigem Material, beispielsweise aus ferromagnetischem Material, und weist keine elektrische Kontakte zum Stator auf, was mit ein Grund dafür ist, dass ein SR-Motor prinzipbedingt für Anwendungen geeignet ist, bei denen hohe Zuverlässigkeit gefragt ist, beispielsweise im Bereich der Luft- und Raumfahrt, bei elektrischen Lenksystemen im Kraftfahrzeugbereich oder dergleichen. Da am Motor selbst keine elektrische Kommutierung stattfindet, ist der SR-Motor auch für explosionsgefährdete Umgebungen, beispielsweise im Bergbau, geeignet. Einen derartigen Reluktanzmotor zeigt die US-A-5,345,131.

Allerdings kann mittels eines Ringstators nur in begrenztem Umfang auf den Anker einwirkende magnetische Energie erzeugt werden. Ein weiteres Problem ist, dass beim Ausfall der den Radialfluss-Stator versorgenden Stromversorgungseinrichtung der SR-Motor insgesamt nicht mehr betriebsfähig ist.

### VORTEILE DER ERFINDUNG

Bei dem erfindungsgemäßen geschalteten, bürstenlosen Reluktanzmotor ist zusätzlich zum Radialfluss-Stator ein Transversalfluss-Stator vorgesehen, der zum Erzeugen eines auf den Anker in transversaler Richtung wirkenden magnetischen Transversalflusses geeignet ist. Der Anker wird demnach nicht nur in radialer Richtung, sondern auch in transversaler Richtung von magnetischem Fluss durchflossen. Man erhält hierdurch eine höhere magnetische Energiedichte, was letztlich eine höhere Leistung des SR-Motors zur Folge hat. Weiterhin weist der erfindungsgemäße SR-Motor eine höhere Zuverlässigkeit auf, da jeder der beiden Statoren, also der Radialfluss-Stator und der Transversalfluss-Stator, unabhängig vom jeweils anderen Stator bestrombar ist. Des weiteren sind erfindungsgemäss die Ankerpole zwischen jeweils zwei einander zugeordneten, magnetisch gegensinnig orientierten Transversalfluss-Polen hindurch beweglich angeordnet. Auf diese Weise wirkt der magnetische Transversalfluss optimal auf den Anker ein.

Vorteilhafte Ausgestaltungen der Erfindung ergeben sich aus den abhängigen Ansprüchen sowie aus der Beschreibung.

Vorteilhaft weist der Transversalfluss-Stator mindestens zwei Transversalfluss-Joche auf, die jeweils zwei einander zugeordnete, magnetisch gegensinnig orientierte Transversalfluss-Pole miteinander verbinden.

Hinsichtlich der Bauweise der Transversalfluss-Joche sind verschiedene Varianten möglich, von denen nachfolgend zwei erläutert werden. Kombinationen der nachfolgend erläuterten Varianten sind ebenfalls möglich.

Zumindest teilweise sind die Transversalfluss-Joche zweckmäßigerweise an der dem Anker entgegengesetzten Seite des Radialfluss-Stators angeordnet, so dass der über das jeweilige Transversalfluss-Joch fließende Magnetfluss an der dem Anker entgegengesetzten Seite des Radialfluss-Stators vorbeigeführt wird. Bei einer Bauweise des erfindungsgemäßen SR-Motors als Innenläufer sind die Transversalfluss-Joche außenseitig am Radialfluss-Stator angeordnet, wobei der über das Transversalfluss-Joch fließende Magnetfluss außenseitig am Radialfluss-Stator vorbeigeführt wird.

Die Transversalfluss-Joche können als vom Radialfluss-Stator unabhängige Baueinheiten ausgeführt sein. Es ist aber auch vorteilhaft möglich, dass die Transversalfluss-Joche teilweise vom Radialfluss-Stator gebildet werden. Dieser führt somit nicht nur magnetische Radialflüsse, sondern auch magnetische Transversalflüsse.

Bei einer alternativen Bauform der Transversalfluss-Joche, die jedoch prinzipiell auch in Kombination mit der obigen Bauform der Transversalfluss-Joche anwendbar ist, sind die Transversalfluss-Joche an entgegengesetzten Stirnseiten des Ankers angeordnet, wobei jeweils ein erstes Transversalfluss-Joch mit ersten Transversalfluss-Polen auf der einen Stirnseite und ein zweites Transversalfluss-Joch mit zweiten Transversalfluss-Polen, die den ersten Transversalfluss-Polen magnetisch zugeordnet sind, auf der entgegengesetzten Stirnseite angeordnet ist. Dabei können die Transversalfluss-Joche kuppelartig ausgeführt sein und beispielsweise mehrere an einer Stirnseite des Ankers angeordnete Transversalfluss-Joche an einem Kuppelmittelpunkt miteinander verbunden sein.

Zweckmäßigerweise sind die Transversalfluss-Pole und die Radialfluss-Pole zueinander versetzt angeordnet. Dabei ist vorteilhaft vorgesehen, dass jeweils mindestens ein Transversalfluss-Pol derart versetzt zwischen zwei Radialfluss-Polen angeordnet ist, dass ein gleichmäßiger Drehmomentverlauf des Ankers erzielbar ist. Es versteht sich, dass zur Erzielung eines gleichmäßigen Drehmomentverlaufs nicht nur die Transversalfluss-Pole und die Radialfluss-Pole in geeigneter Form zueinander versetzt angeordnet sind, sondern zudem auch eine geeignete Bestromung von Transversalfluss-Polen und Radialfluss-Polen vorgesehen ist.

Zur Erhöhung der Zuverlässigkeit des erfindungsgemäßen Reluktanzmotors ist zweckmäßigerweise vorgesehen, dass zur Bestromung der Radialfluss-Spulen ein erstes Stromeinspeisesystem und zur Bestromung der Transversalfluss-Spulen ein zweites Stromeinspeisesystem vorgesehen sind. Als Stromeinspeisesysteme sind beispielsweise Stromrichter geeignet.

Die Stromeinspeisesysteme bzw. die Stromrichter sind vorteilhaft miteinander gekoppelt, so dass die Bestromungen der Radialfluss-Spulen bzw. der Transversalfluss-Spulen miteinander koordinierbar sind. Durch diese Maßnahme ist insbesondere der bereits oben angesprochene gleichmäßige Drehmomentverlauf des Ankers erzielbar.

Die beiden Stromeinspeisesysteme sind vorzugsweise so ausgestaltet, dass beim Ausfall eines Stromeinspeisesystems das jeweils andere weiter betreibbar ist. Somit ist zumindest ein Stromeinspeisesystem betriebsfähig, so dass letztlich der erfindungsgemäße Reluktanzmotor auch beim Ausfall eines Stromeinspeisesystems betriebsbereit ist.

Prinzipiell ist es aber auch möglich, dass zur Bestromung der Transversalfluss-Spulen und zur Bestromung der Radialfluss-Spulen ein gemeinsames Stromeinspeisesystem, beispielsweise ein einziger Stromrichter, vorgesehen ist. Dieser kann - falls erforderlich - durch geeignete Maßnahmen, beispielsweise durch Dopplung von Baugruppen, besonders betriebssicher ausgestaltet sein.

Da der Anker sowohl in radialer Richtung als auch in transversaler Richtung von magnetischem Fluss durchflossen wird, besteht er vorzugsweise im Wesentlichen aus einem Ferrit oder einem Sintermetall mit schlechter elektrischer, jedoch guter magnetischer Leitfähigkeit. Ein solches Material ist auch bei der oben erläuterten Maßnahme zweckmäßig, bei der die Transversalfluss-Joche teilweise vom Radialfluss-Stator gebildet werden. Diejenigen Bereiche des Radialfluss-Stators, die sowohl von radialem als auch von transversalem magnetischen Fluss durchflossen werden, sind vorzugsweise aus Ferrit oder einem Sintermetall, das jedenfalls schlechte elektrische und gute magnetische Leitfähigkeit aufweist.

Der Radialfluss-Stator weist vorteilhaft eine im Wesentlichen ringförmige Gestalt auf. Andere Bauformen, beispielsweise rechteckige Außenkonturen oder dergleichen, sind ohne Weiteres denkbar.

### ZEICHNUNG

Ausführungsbeispiele der Erfindung sind in der Zeichnung dargestellt und in der nachfolgenden Beschreibung näher erläutert. Es zeigen:
- Fig. 1A: einen erfindungsgemäßen geschalteten Reluktanzmotor 10 in Draufsicht, bei dem Transversalfluss-Joche außenseitig am Ringfluss-Stator angeordnet sind,
- Fig. 1B: eine Querschnittsansicht des Reluktanzmotors 10 entlang einer Schnittlinie A-A in Fig. 1A,
- Fig. 2A: einen erfindungsgemäßen Reluktanzmotor 50 in Draufsicht, bei dem Transversalfluss-Joche auf jeweils entgegengesetzten Stirnseiten von dessen Anker 51 diesen jeweils überspannend angeordnet sind, und
- Fig. 2B: den Reluktanzmotor 50 aus Fig. 2A in Querschnittsansicht entlang einer Schnittlinie B-B.

### BESCHREIBUNG DER AUSFÜHRUNGSBEISPIELE

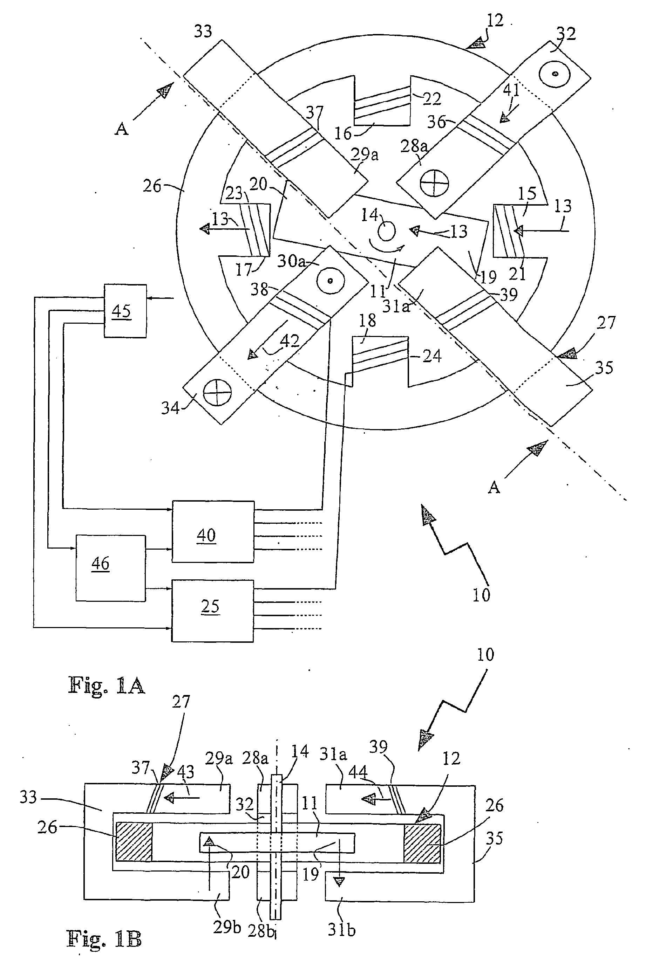

Im Folgenden wird zunächst der geschaltete, bürstenlose Reduktanzmotor 10 gemäß den Fig. 1A, 1B erläutert. Ein Radialfluss-Stator 12 dient zum Erzeugen eines in radialer Richtung wirkenden magnetischen Radialflusses auf einen Anker 11, der an einer Drehachse 14 drehbar gelagert ist. Der Radialfluss 13 fließt von Radialfluss-Polen 15, 17 und 16, 18 des Radialfluss-Stators 12 über Ankerpole 19, 20 des Ankers 11. An den Radialfluss-Polen 15 - 18 sind Radialfluss-Spulen 21 - 24 angeordnet, die durch einen Stromrichter 25, der ein Stromeinspeisesystem bildet, umlaufend bestromt werden. Die Bestromung der Spulen 21 - 24 hängt beispielsweise von der jeweiligen Position und/oder Drehgeschwindigkeit des Ankers 11 ab. Jedenfalls kann der Stromrichter 25 eine für derartige Zwecke geeignete Steuer- und Regeleinheit enthalten.

In der in Fig. 1A gezeigten Stellung des Ankers 11 fließt der magnetische Radialfluss 13 vom Ringstator-Pol 15 zum Ankerpol 19 und über den Anker 11 hinweg zum Ankerpol 20. Von dort fließt der Radialfluss 13 zum Radialfluss-Pol 17. Der magnetische Kreis wird durch einen Stator-Ring 26 geschlossen, an dem die Radialfluss-Pole 15 - 18 angeordnet sind. An dieser Stelle sei bemerkt, dass die Zeichnung zwar an sich schematisch ist, hinsichtlich der Gestaltung der Radialfluss-Pole 15 - 18 jedoch ein typisches Merkmal von geschalteten Reluktanzmotoren deutlich macht, nämlich dass die Radialfluss-Pole zum Anker hin vorstehen. Es versteht sich allerdings, dass dieses Merkmal nicht zwingend ist.

Der Anker 11 versucht, den Weg des magnetischen Flusses 13 zu verkürzen, wobei der Anker 11 von der gezeigten Stellung ausgehend in Richtung der Radialfluss-Pole 15, 17 gedreht wird, so dass ein an der Drehachse 14 abgreifbares Drehmoment erzeugt wird. Im Anschluss an die Bestromung der Radialfluss-Spulen 21, 23 werden die Radialfluss-Spulen 22, 24 bestromt, so dass der Anker 11 seine Drehbewegung, die durch einen neben der Drehachse 14 angeordneten Pfeil angedeutet ist, fortsetzt.

Zusätzlich zum Radialfluss-Stator 12 weist der Reluktanzmotor 10 einen Transversalfluss-Stator 27 mit Transversalfluss-Polen 28a, 28b - 31a, 31b auf (in Fig. 1A sind nur die mit einem Index "-a" versehenen Transversalfluss-Pole 28a - 31a sichtbar). Die Transversalfluss-Pole 28a, 28b sind durch ein Transversalfluss-Joch 32, die Transversalfluss-Pole 29a, 29b - 31a, 31b entsprechend durch Transversalfluss-Joche 33 - 35 miteinander verbunden.

An den Transversalfluss-Jochen 32 - 35 sind Transversalfluss-Spulen 36 - 39 angeordnet, die durch einen Stromrichter 40 umlaufend bestromt werden. Der Stromrichter 25 bildet ein erstes, der Stromrichter 40 ein zweites Stromeinspeisesystem. Zur Vereinfachung der Darstellung ist in der Zeichnung jedem Transversalfluss-Joch 32 - 35 jeweils nur eine Transversalfluss-Spule 36 - 39 zugeordnet - mehrere Transversalfluss-Spulen sind auch möglich. Es ist beispielsweise auch möglich, dass jedem der Transversalfluss-Pole 28a, 28b - 31a, 31b jeweils ein Transversalfluss-Spule zugeordnet ist.

Mittels der Transversalfluss-Spulen 36 - 39 ist ein auf den Anker 11 in transversaler Richtung, also parallel zur Drehachse 14, wirkender Transversalfluss erzeugbar, wobei bei geschalteter, umlaufender Bestromung der Transversalfluss-Spulen 36 - 39 durch den Stromrichter 40 der Anker 11 in eine Drehbewegung versetzbar ist. Auch bei Ausfall des Stromrichters 25 kann somit der Reluktanzmotor 10 weiter betrieben werden.

Beispielhafte magnetische Transversalflüsse 41, 42 sind bei den Transversalfluss-Polen 28a, 28b bzw.. 30a, 30b in Fig. 1A eingezeichnet. Die Transversalflüsse 41, 42 werden durch Bestromung der Transversalfluss-Spulen 36 bzw. 38 erzielt.

Der Anker 11 versucht, den Weg der Transversalflüsse 41, 42 zu verkürzen, wobei sich der Ankerpol 19 in Richtung der Transversalfluss-Pole 28a, 28b und der Ankerpol 20 in Richtung der Transversalfluss-Pole 30a, 30b dreht.

Weitere beispielhafte magnetische Transversalflüsse 43, 44 sind in Fig. 1B gezeigt. Die Transversalflüsse 43, 44 werden durch Bestromung der Transversalfluss-Spulen 37 bzw. 39 hervorgerufen und fließen über die Transversalfluss-Joche 33 bzw. 35, die außenseitig am Radialfluss-Stator 12 angeordnet sind. Zur Fig. 1B ist noch anzumerken, dass der Anker 11 eine andere Stellung einnimmt als in Fig. 1A und dass aus Gründen der Vereinfachung sowie zur besseren Übersichtlichkeit die an sich sichtbaren Radialfluss-Pole 15, 16 nicht gezeigt sind.

Bei der in Fig. 1A gezeigten Ausführungsform sind die Transversalfluss-Joche 32 - 35 am Ring 26 des Radialfluss-Stators 12 vorbeigeführt. Sie sind dabei vorzugsweise aus Trafoblech, das in radialer Richtung geschichtet ist. Entsprechend enthält der Radialfluss-Stator 12 vorzugsweise Trafobleche, die quer zur Drehachse 14 geschichtet sind.

Prinzipiell wäre es auch möglich, dass Transversalfluss-Joche zumindest teilweise vom Radialfluss-Stator gebildet werden, wobei beispielsweise ein Statorring den magnetischen Transversalfluss führt.

Bei der Darstellung gemäß Fig. 1B ist der Transversalfluss-Stator 27 beabstandet zum Radialfluss-Stator 12 angeordnet. Bei der gezeigten Bauform wäre es prinzipiell aber auch möglich, dass der Transversalfluss-Stator unmittelbar am Radialfluss-Stator angeordnet ist.

Beim Ausführungsbeispiel sind die Stromrichter 25 und 40 jeweils unabhängig voneinander betreibbar, so dass eine hohe Betriebssicherheit des Reluktanzmotors 10 erzielbar ist. Eine Erfassungseinrichtung 45 versorgt die Stromrichter 25, 40 jeweils unabhängig voneinander mit Ist-Werten (angedeutet durch nicht näher bezeichnete Pfeile) bezüglich des Reluktanzmotors 10, beispielsweise der jeweiligen Position des Ankers 11, so dass die Stromrichter 25, 40 eine geeignete, umlaufende Bestromung der Radialfluss-Pole 15 - 18 bzw. der Transversalfluss-Pole 28a, 28b - 31a, 31b durchführen können.

Zusätzlich werden die Stromrichter 25, 40 von einer zentralen Steuerung 46 gesteuert, so dass die Bestromung des Radialfluss-Stators 12 und des Transversalfluss-Stators 27 koordiniert ist. Die Erfassungseinrichtung 45 versorgt auch die Steuerung 46 mit Ist-Werten und steuert in Abhängigkeit von diesen sowie von nicht eingezeichneten Sollwert-Vorgaben die Stromrichter 25 und 40 an, so dass beispielsweise bei der in Figur 1A gezeigten Stellung des Ankers 11 zunächst die Radialfluss-Spulen 21, 23 und anschließend die Transversalfluss-Spulen 36, 38 bestromt werden.

Beim Reluktanzmotor 10 sind die Transversalfluss-Pole 28a, 28b - 31a, 31b versetzt zu den Radialfluss-Polen 15 - 18 angeordnet, wobei sich jeweils ein Transversalfluss-Pol mittig zwischen zwei Radialfluss-Polen befindet. Dies dient im Zusammenwirken mit der koordinierten Ansteuerung der Stromrichter 25, 40 zur Erzeugung eines möglichst gleichmäßigen Drehmomentverlaufes des an der Drehachse 14 abgreifbaren Drehmoments. Durch die mittige Anordnung der Transversalfluss-Pole zwischen den Radialfluss-Polen ist dieser gleichmäßige Drehmomentverlauf in beiden Drehrichtungen möglich.

Prinzipiell ist es aber auch denkbar, dass dann, wenn ein erfindungsgemäßer Reluktanzmotor nur für den Betrieb in einer Drehrichtung vorgesehen ist, die Transversalfluss-Pole nicht jeweils mittig zwischen Radialfluss-Polen angeordnet sind. Sie könnten beispielsweise auch jeweils näher zu denjenigen Radialfluss-Polen angeordnet sein, die ihnen in Drehrichtung des Ankers vorhergehen.

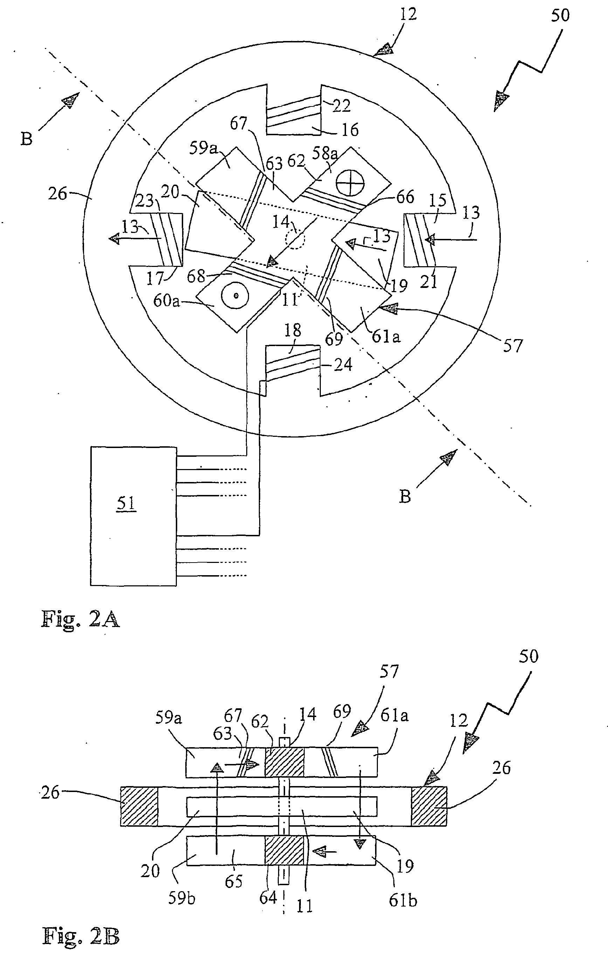

Der in Fig. 2A, 2B gezeigte Reluktanzmotor ist hinsichtlich seiner den Radialfluss betreffenden Bauteile gleichartig aufgebaut wie der Reluktanzmotor 10, lediglich mit dem Unterschied, dass anstelle des Stromrichters 25 ein Stromrichter 51 vorgesehen ist, der zusätzlich auch die später noch erläuterten, magnetischen Transversalfluss betreffenden Komponenten mit elektrischem Strom versorgt. Die den magnetischen Radialfluss betreffenden Komponenten des Reluktanzmotors 50 sind dementsprechend gleich bezeichnet wie diejenigen des Reluktanzmotors 10.

Ein Transversalfluss-Stator 57 des Reluktanzmotors 50 weist Transversalfluss-Pole 58a, 60a; 59a, 61a; 58b, 60b; 59b, 61b, die über Joche 62, 63, 64 bzw. 65 jeweils miteinander verbunden sind. Die Transversalfluss-Pole 58b - 61b sowie die Transversalfluss-Joche 64, 65 sind in Fig. 2A nicht sichtbar. Die Transversalfluss-Joche 62, 63 sind an der oberseitigen Stirnseite des Ankers 11, die Transversalfluss-Joche 64, 65 an dessen unterseitiger Stirnseite angeordnet, wobei die Transversalfluss-Joche 62 - 65 die jeweiligen Stirnseiten überspannen. Die Transversalfluss-Joche 62, 63 und 64, 65 sind jeweils kreuzförmig miteinander verbunden. Die Drehachse 14 durchdringt die Transversalfluss-Joche 62, 63 und 64, 65 und ist beispielsweise drehbar an diesen gelagert. Es ist prinzipiell aber auch möglich, dass stirnseitig den Anker jeweils überspannende Transversalfluss-Joche neben der jeweiligen Drehachse des Ankers angeordnet sind.

An den Transversalfluss-Jochen 62 - 65 sind Transversalfluss-Spulen 66, 67, 68 bzw. 69 angeordnet, mit denen ein magnetischer Transversalfluss erzeugbar ist, der den Anker 11 in transversaler Richtung, also parallel zur Drehachse 14, durchfließt. Der Anker 11 versucht, den Weg des jeweiligen magnetischen Transversalflusses zu verkürzen, und dreht sich in Richtung von denjenigen Transversalfluss-Polen 58a - 61b, die magnetisch erregt sind. Zur Versorgung der Transversalfluss-Spulen 66 - 69 ist beim Ausführungsbeispiel gemäß Fig. 2A, Fig. 2B der Stromrichter 51 vorgesehen, der auch die Radialfluss-Spulen 21 - 24 bestromt. Eine Erfassungseinrichtung zum Erfassen von Ist-Werten bezüglich des Reluktanzmotors 50 ist aus Gründen der Vereinfachung in Fig. 2A nicht eingezeichnet.

Die geschalteten Reluktanzmotoren der Ausführungsbeispiele sind so genannte 4/2-Motoren mit vier Radialfluss-Polen und zwei Ankerpolen. Das erfindungsgemäße Prinzip ist jedoch prinzipiell bei allen Arten von geschalteten Reluktanzmotoren anwendbar, beispielsweise auch bei so genannten 3/2-Motoren oder 6/8-Motoren. Eine bevorzugte Variante der Erfindung sieht sogenannte 6/4-Motoren vor.

Die Anzahl der Transversalfluss-Pole muss nicht zwingend mit der Anzahl der Radialfluss-Pole korrelieren, wobei, wie im Ausführungsbeispiel, beispielsweise doppelt so viele Transversalfluss-Pole vorgesehen sind wie Radialfluss-Pole. Es ist prinzipiell auch möglich, dass viermal so viele Transversalfluss-Pole vorgesehen sind wie Radialfluss-Pole oder gleich viel Transversalfluss-Pole wie Radialfluss-Pole.

Es versteht sich, dass der Radialfluss-Stator und der Transversalfluss-Stator eine kompakte Baueinheit bilden können.

Das erfindungsgemäße Konzept ist auch bei sogenannten Außenläufermotoren anwendbar.

## Patentansprüche

1. Geschalteter, bürstenloser Reluktanzmotor (10; 50) mit einem Radialfluss-Stator (12), an dessen Radialfluss-Polen (15-18) elektrische Radialfluss-Spulen (21-24) zum Erzeugen eines auf einen drehbar gelagerten Anker (11) mit mindestens zwei Ankerpolen (19, 20) in radialer Richtung wirkenden magnetischen Radial-Flusses (13) angeordnet sind, wobei bei einer geschalteten, umlaufenden Bestromung der Radialfluss-Spulen (21-24) der Anker (11) in eine Drehbewegung versetzbar ist, bei der die mindestens zwei Ankerpole (19, 20) in Richtung zu jeweils magnetisch erregten Radialfluss-Polen (15, 17) zur Verkürzung des über die Ankerpole (19, 20) führenden jeweiligen mangetischen Radial-Flussweges gedreht werden und wobei der bürstenlose Reluktanzmotor (10; 50) einen Transversalfluss-Stator (27; 57) aufweist, dessen Transversalfluss-Pole (28a,28b-31a,31b; 58a,58b-61a,61b) elektrische Transversalfluss-Spulen (36-39; 66-69) zum Erzeugen eines auf den Anker (11) in transversaler Richtung wirkenden magnetischen Transversal-Flusses (41, 42) zugeordnet sind, wobei bei einer geschalteten, umlaufenden Bestromung der Transversalfluss-Spulen (36-39; 66-69) der Anker (11) in eine Drehbewegung versetzt ist, wobei die Transversalfluss-Pole (28a,28b-31a,31b; 58a,58b-61a,61b) derart angeordnet sind, dass die Ankerpole (19, 20) zwischen jeweils zwei einander in transversaler Richtung zugeordneten, magnetisch gegensinnig orientierten Transversalfluss-Polen (28a, 28b-31a, 31b; 58a, 58b-61a, 61b) hindurch drehbar angeordnet sind.

2. Reluktanzmotor nach Anspruch 1, **dadurch gekennzeichnet, dass** der Transversalfluss-Stator (27; 57) mindestens zwei Transversalfluss-Joche (32-35; 62-65) aufweist, die jeweils zwei einander zugeordnete, magnetisch gegensinnig orientierte Transversalfluss-Pole (28a, 28b-31a, 31b; 58a,58b-61a,61b) miteinander verbinden.

3. Reluktanzmotor nach einem der vorhergehenden Ansprüche, **dadurch gekennzeichnet, dass** zumindest teilweise die Transversalfluss-Joche (32-35) an der dem Anker (11) entgegengesetzten Seite des Radialfluss-Stators (12), insbesondere außenseitig am Radialfluss-Stator (12), angeordnet sind, so dass der über das jeweilige Transversalfluss-Joch (32-35) fließende Magnetfluss an der dem Anker (11) entgegengesetzten Seite des Radialfluss-Stators (12) bzw. außenseitig am Radialfluss-Stator (12) vorbeigeführt wird.

4. Reluktanzmotor nach Anspruch 3, **dadurch gekennzeichnet, dass** die Transversalfluss-Joche (32-35) teilweise vom Radialfluss-Stator (12) gebildet werden.

5. Reluktanzmotor nach einem der vorhergehenden Ansprüche, **dadurch gekennzeichnet, dass** die Transversalfluss-Joche (62-65) an entgegengesetzten Stirnseiten des Ankers (11), diesen jeweils insbesondere kuppelbogenartig überspannend angeordnet sind, wobei jeweils ein erstes Transversalfluss-Joch (62, 63) mit ersten Transversalfluss-Polen (58a, 60a; 59a, 61a) auf der einen Stirnseite und ein zweites Transversalfluss-Joch (64, 65) mit zweiten Transversalfluss-Polen (58b, 60b; 59b, 61b), die den ersten Transversalfluss-Polen (58a, 60a; 59a, 61a) magnetisch zugeordnet sind, auf der entgegengesetzten Stirnseite angeordnet ist.

6. Reluktanzmotor nach einem der vorhergehenden Ansprüche, **dadurch gekennzeichnet, dass** jeweils mindestens ein Transversalfluss-Pol (28a,28b-31a,31b; 58a,58b-61a,61b) derart versetzt zwischen zwei Radialfluss-Polen (15-18) angeordnet ist, dass ein gleichmäßiger Drehmomentverlauf des Ankers (11) erzielbar ist.

7. Reluktanzmotor nach einem der vorhergehenden Ansprüche, **dadurch gekennzeichnet, dass** zur Bestromung der Radialfluss-Spulen (21-24) ein erstes Stromeinspeisesystem (25), insbesondere ein erster Stromrichter, und zur Bestromung der Transversalfluss-Spulen (36-39; 66-69) ein zweites Stromeinspeisesystem (40), insbesondere ein zweiter Stromrichter, vorgesehen sind.

8. Reluktanzmotor nach Anspruch 7, **dadurch gekennzeichnet, dass** das erste und das zweite Stromeinspeisesystem (25, 40) gekoppelt sind, so dass die Bestromungen der Radialfluss-Spulen (21-24) bzw. der Transversalfluss-Spulen (36-39; 66-69) miteinander koordinierbar sind.

9. Reluktanzmotor nach Anspruch 7 oder 8, **dadurch gekennzeichnet, dass** bei einem Ausfall des ersten oder des zweiten Stromeinspeisesystems (25, 40) das jeweils andere, nicht ausgefallene Stromeinspeisesystem (40, 25) weiterbetreibbar ist.

10. Reluktanzmotor nach einem der Ansprüche 1 bis 7, **dadurch gekennzeichnet, dass** zur Bestromung der Transversalfluss-Spulen (36-39; 66-69) und zur Bestromung der Radialfluss-Spulen (21-24) ein gemeinsames Stromeinspeisesystem (51), insbesondere ein einziger Stromrichter, vorgesehen ist.

11. Reluktanzmotor nach einem der vorhergehenden Ansprüche, **dadurch gekennzeichnet, dass** der Anker (11) im Wesentlichen aus einem Ferrit oder einem Sintermetall mit schlechter elektrischer und guter magnetischer Leitfähigkeit besteht.

12. Reluktanzmotor nach einem der vorhergehenden Ansprüche, **dadurch gekennzeichnet, dass** der Radialfluss-Stator (12) eine im wesentlichen ringförmige Gestalt aufweist.

## Claims

1. Switched, brushless reluctance motor (10; 50) having a radial flux stator (12), electrical radial flux coils (21-24) being arranged at its radial flux poles (15-18) for the purpose of generating a radial magnetic flux (13) acting in the radial direction on an armature (11), which is mounted such that it can rotate, having at least two armature poles (19, 20), it being possible for the armature (11) to be set in rotary motion in the event of a switched, revolving energization of the radial flux coils (21-24), in the case of which rotary motion the at least two armature poles (19, 20) are rotated in the direction towards in each case magnetically excited radial flux poles (15, 17) in order to shorten the respective radial magnetic flux path which leads via the armature poles (19, 20), and the brushless reluctance motor (10; 50) having a transverse flux stator (27; 57), whose transverse flux poles (28a, 28b-31a, 31b; 58a, 58b-61a, 61b) have electrical transverse flux coils (36-39; 66-69) associated with them for the purpose of generating a transverse magnetic flux (41, 42) acting on the armature (11) in the transverse direction, the armature (11) being set in rotary motion in the event of a switched, revolving energization of the transverse flux coils (36-39; 66-69), the transverse flux poles (28a, 28b-31a, 31b; 58a, 58b-61a, 61b) being arranged such that the armature poles (19, 20) are arranged such that they can rotate through between in each case two transverse flux poles (28a, 28b-31a, 31b; 58a, 58b-61a, 61b) which are associated with one another in the transverse direction and are oriented magnetically in opposition.

2. Reluctance motor according to Claim 1, **characterized in that** the transverse flux stator (27; 57) has at least two transverse flux yokes (32-35; 62-65), which in each case connect two transverse flux poles (28a, 28b-31a, 31b; 58a, 58b-61a, 61b) to one another which are associated with one another and are oriented magnetically in opposition.

3. Reluctance motor according to one of the preceding claims, **characterized in that** the transverse flux yokes (32-35) are arranged at least partially on that side of the radial flux stator (12) which is opposite the armature (11), in particular on the outside of the radial flux stator (12), such that the magnetic flux flowing via the respective transverse flux yoke (32-35) is guided past that side of the radial flux stator (12) which is opposite the armature (11) or on the outside of the radial flux stator (12).

4. Reluctance motor according to Claim 3, **characterized in that** the transverse flux yokes (32-35) are partially formed by the radial flux stator (12).

5. Reluctance motor according to one of the preceding claims, **characterized in that** the transverse flux yokes (62-65) are arranged on opposite end sides of the armature (11) so as to overlap said armature in each case in particular in the form of a coupling arc, in each case a first transverse flux yoke (62, 63) with first transverse flux poles (58a, 60a; 59a, 61a) being arranged on one end side, and a second transverse flux yoke (64, 65) with second transverse flux poles (58b, 60b; 59b, 61b), which are magnetically associated with the first transverse flux poles (58a, 60a; 59a, 61a), being arranged on the opposite end side.

6. Reluctance motor according to one of the preceding claims, **characterized in that** in each case at least one transverse flux pole (28a, 28b-31a, 31b; 58a, 58b-61a, 61b) is arranged such that it is offset between two radial flux poles (15-18) such that it is possible to achieve a uniform torque profile of the armature (11).

7. Reluctance motor according to one of the preceding claims, **characterized in that** a first current feed system (25), in particular a first converter, is provided for the energization of the radial flux coils (21-24), and a second current feed system (40), in particular a second converter, is provided for the energization of the transverse flux coils (36-39; 66-69).

8. Reluctance motor according to Claim 7, **characterized in that** the first and the second current feed systems (25, 40) are coupled such that the energization of the radial flux coils (21-24) and the energization of the transverse flux coils (36-39; 66-69) can be coordinated with one another.

9. Reluctance motor according to Claim 7 or 8, **characterized in that**, in the event of a failure of the first or the second current feed system (25, 40), the respective other current feed system (40, 25) which has not failed can continue to be operated.

10. Reluctance motor according to one of Claims 1 to 7, **characterized in that** a common current feed system (51), in particular a single converter, is provided for the energization of the transverse flux coils (36-39; 66-69) and for the energization of the radial flux coils (21-24).

11. Reluctance motor according to one of the preceding claims, **characterized in that** the armature (11) essentially consists of a ferrite or a sintered metal having poor electrical conductivity and good magnetic conductivity.

12. Reluctance motor according to one of the preceding claims, **characterized in that** the radial flux stator (12) has an essentially annular design.

## Revendications

1. Moteur à réluctance (10, 50) sans collecteur, commuté, ayant un stator à flux radial (12) dont les pôles de flux radial (15 - 18) sont munis de bobines électrique de flux radial (21 - 24) pour générer un flux radial magnétique (13) agissant dans la direction radiale sur un induit (11) monté à rotation, ayant au moins deux pôles (19, 20),
dans lequel, pour une alimentation commutée des bobines de flux radial (21-24) en circulation, l'induit (11) est mis en rotation, au moins deux pôles d'induit (19, 20) étant entraînés en rotation dans la direction des pôles à flux radial (15, 17) excités chaque fois magnétiquement, pour raccourcir le chemin du flux radial magnétique respectif passant par les pôles d'induit (19, 20), et
le moteur à réluctance (10, 50) sans collecteur, ayant un stator à flux transversal (27, 57) dont les pôles de flux transversal (28a, 28b-31a, 31b ; 58a, 58b-61a, 61b) comportent des bobines électriques de flux transversal (36-39 ; 66-69) pour générer un flux magnétique transversal (41, 42) agissant dans la direction transversale sur l'induit (11), et l'alimentation périphérique commutée des bobines à flux transversal (36-39 ; 66-69) met l'induit (11) en rotation,
les pôles à flux transversal (28a, 28b-31a, 31b ; 58a, 58b-61a, 61b) étant installés pour que les pôles d'induit (19, 20) soient chaque fois installés à rotation entre deux pôles à flux transversal (28a, 28b-31a, 31 b ; 58a, 58b-61a, 61b) orientés magnétiquement en sens opposé, associés dans la direction transversale.

2. Moteur à réluctance selon la revendication 1,
**caractérisé en ce que**
le stator à flux transversal (27, 57) comporte au moins deux étriers à flux transversal (31-35 ; 62-65) reliant chaque fois deux pôles associés à flux transversal (28a, 28b-31a, 31b ; 58a, 58b-61a, 61b) orientés magnétiquement en sens opposé.

3. Moteur à réluctance selon l'une quelconque des revendications précédentes,
**caractérisé en ce qu'**
au moins en partie les étriers à flux transversal (32-35) sont prévus sur le côté du stator à flux radial (12) opposé à l'induit (11), notamment sur le côté extérieur du stator à flux radial (12) pour que le flux magnétique passant par l'étrier à flux transversal (32-35) respectif passe sur le côté du stator à flux radial (12) à l'opposé de l'induit (11) ou sur le côté extérieur du stator à flux radial (12).

4. Moteur à réluctance selon la revendication 3,
**caractérisé en ce que**
les étriers à flux transversal (32-35) sont formés en partie par le stator à flux radial (12).

5. Moteur à réluctance selon l'une quelconque des revendications précédentes,
**caractérisé en ce que**
les étriers à flux transversal (62-65) sont prévus sur les faces frontales opposées de l'induit (11) en chevauchant toutefois celles-ci notamment en arc de cercle et chaque fois un premier étrier à flux transversal (62, 63) est monté avec des premiers pôles à flux transversal (58a, 60a ; 59a, 61a) sur une face frontale et un second étrier à flux transversal (64, 65) est monté avec des seconds pôles à flux transversal (58b, 60b ; 59b, 61b) associés magnétiquement aux premiers pôles à flux transversal (58a, 60a ; 59a, 61a), sur la face frontale opposée.

6. Moteur à réluctance selon l'une quelconque des revendications précédentes,
**caractérisé en ce qu'**
à chaque fois au moins un pôle à flux transversal (28a, 28b-31a, 31b ; 58a, 58b-61a, 61b), est décalé entre deux pôles à flux radial (15-18) pour réaliser une courbe de couple régulière pour l'induit (11).

7. Moteur à réluctance selon l'une quelconque des revendications précédentes,
**caractérisé par**
un premier système d'alimentation électrique (25), notamment un premier redresseur pour alimenter les bobines à flux radial (21-24), et un second système d'alimentation en courant (40), notamment un second redresseur pour alimenter les bobines à flux transversal (36-39, 66-69).

8. Moteur à réluctance selon la revendication 7,
**caractérisé en ce que**
le premier et le second système d'alimentation en courant (25, 40) sont couplés pour coordonner les alimentations des bobines à flux radial (21-24) ou des bobines à flux transversal (36-39 ; 66-69).

9. Moteur à réluctance selon l'une quelconque des revendications 7 et 8,
**caractérisé en ce qu'**
en cas de défaillance du premier ou du second système d'alimentation en courant (25, 40), l'autre système (40, 25) non tombé en panne continu de fonctionner.

10. Moteur à réluctance selon l'une quelconque des revendications 1 à 7,
**caractérisé par**
un système d'alimentation électrique commun (51) notamment un unique redresseur pour alimenter les bobines à flux transversal (36-39 ; 66-69) et pour alimenter les bobines à flux radial (21-24).

11. Moteur à réluctance selon l'une quelconque des revendications précédentes,
**caractérisé en ce que**
l'induit (11) est principalement en ferrite ou en un métal fritté à mauvaise conductivité électrique et bonne conductivité magnétique.

12. Moteur à réluctance selon l'une quelconque des revendications précédentes,
**caractérisé en ce que**
le stator à flux radial (12) a une forme essentiellement annulaire.
